(19) Europäisches Patentamt / European Patent Office / Office européen des brevets

(11) **EP 3 085 149 B1**

(12) **EUROPEAN PATENT SPECIFICATION**

(45) Date of publication and mention
of the grant of the patent:
**22.07.2020 Bulletin 2020/30**

(21) Application number: **14702041.6**

(22) Date of filing: **31.01.2014**

(51) Int Cl.:
*H04W 28/16* *(2009.01)*          *H04W 16/04* *(2009.01)*
*H04W 16/10* *(2009.01)*

(86) International application number:
**PCT/EP2014/051952**

(87) International publication number:
**WO 2015/113632 (06.08.2015 Gazette 2015/31)**

(54) **METHOD FOR DETERMINING SYSTEM RESOURCE SCHEDULING IN COMMUNICATION SYSTEMS**

VERFAHREN ZUR BESTIMMUNG DER SYSTEMRESSOURCENPLANUNG IN KOMMUNIKATIONSSYSTEMEN

PROCÉDÉ POUR DÉTERMINER UNE PLANIFICATION DE RESSOURCES DE SYSTÈME DANS DES SYSTÈMES DE COMMUNICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**26.10.2016 Bulletin 2016/43**

(73) Proprietor: **Huawei Technologies Co., Ltd. Longgang District Shenzhen, Guangdong 518129 (CN)**

(72) Inventors:
• **SOLDATI, Pablo**
  **S-16440 Kista (SE)**
• **VAN DE BEEK, Jaap**
  **S-16440 Kista (SE)**
• **KOUDOURIDIS, George**
  **S-16440 Kista (SE)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
WO-A1-2012/040878       GB-A- 2 491 362
US-A1- 2003 186 693      US-A1- 2011 105 132

**Description**

**Technical Field**

The present invention relates to a method for determining system resource scheduling in communication systems. Furthermore, the invention also relates to a control node device, a communication system comprising at least one node device, a computer program, and a computer program product thereof.

**Background of the Invention**

Traditional communication systems, such as radio cellular systems, are designed to operate with a finite amount of system resources statically assigned to the system entities. For instance, radio cellular systems up to the fourth generation, i.e. the 3GPP Long Term Evolution (LTE) system, are characterized by several network access nodes deployed over a certain service region and statically configured to operate with certain resources at the deployment stage. In other words, a network access node is statically configured to operate within a certain frequency spectrum bandwidth and to transmit with a certain maximum transmission power output.

The optimization of access node placement and their configuration in terms of transmission power output, spectrum/frequency allocation, etc. is also known as network planning. One objective of the access node placement is to guarantee a certain degree of coverage and coverage overlap in a service area so as service outage is reduced and handover between network access nodes can be performed seamlessly. Furthermore, the deployment of network access nodes can be hierarchical with respect to the type of network access nodes. In particular, hierarchical cell planning implies multi-tier networks where each tier consists of a different type of access node with different transmit power characteristics. An access node at a lower tier transmit at a lower transmit power and covers a smaller portion of a service area than an access node at a higher tier. However, the capacity is improved as the distance between the access node and the mobile node is significantly reduced. The objective of hierarchical planning is to perform a tier-planning based on the traffic load within a wider service area.

The configuration of the spectrum band(s) where each network node shall operate is often referred to as frequency re-use planning. One traditional way to manage these limited frequency resources is by assigning a fixed frequency band to a certain geographical region. In second generation systems a licensed frequency band was partitioned into 3 disjoint sub-bands (reuse factor 3) and each base station was assigned one of these sub-bands. The assignment was fixed and static (could only be changed by reconfiguring the base station).

Prior to deployment of the network, a careful planning of the sub-band assignment was carried out in order to assure that base stations in each other's vicinity did not use the same sub-bands; hence interference among different access points was reduced. The basic operating mode of the fourth generation of cellular system (the LTE system) is to let all access nodes utilize the entire frequency spectrum with uniform power distributed across the system bandwidth, thereby creating strong interference to cell edge users. More advanced forms of frequency reuse include: fractional frequency reuse in which the available frequency spectrum is divided into two portions: a portion common to all base stations used for scheduling cell-centre users; and a second portion that is further divided among base stations in a hard frequency reuse manner and used to schedule transmission to/from cell-edge users; and soft frequency reuse, which enables base stations to transmit in the entire frequency spectrum with different power levels: higher transmission power in the portion of the spectrum where cell-edge users are scheduled; lower transmission power in the portion of spectrum where cell-centre users are scheduled.

While the configuration of the communication resources for each access node in radio cellular system is static, the way such resources are used by the access nodes to serve the system users (e.g., mobile stations) can be dynamic. For instance, the related art LTE system can schedule mobile stations in frequency domain on a millisecond time scale, provide methods for interference mitigation, as well as methods for coordinating the transmission and reception among multiple radio access nodes at the order of tens of milliseconds. These methods are referred to as inter-cell interference coordination (ICIC) and comprise a use case of the self-organized network (SON) solution approach. The SON, as defined within LTE, refers mainly to a family of distributed solutions that built on loops with delayed feedback. Typically SON implies autonomous problem solvers that can monitor and determine the state of the environment, make decisions how to best act upon it and then act and communicate feedback and useful information to each other for instance for coordination purposes.

Essentially SON corresponds to a set of distributed algorithms that operate on set of local configuration and operation parameters that optimize different performance objectives of the system depending on the use case. For example, in case of interference coordination the SON targets to improve user throughput by interference minimization. Other SON use cases include coverage and capacity optimization (CCO), mobility robustness optimization (MRO), mobile load balancing (MLB), energy-efficiency enhancements (EEE), etc.

Due to their inherent distributive nature SON solutions are practical when the interacting sites and the parameters they exchange and monitor are kept low. In terms of exchanged parameters, an increasing number of inter-dependencies between sites' (and consequently exchanged parameters) for resource allocation decisions would result to an unnecessarily long convergence time and to a significant amount of signalling overhead. Parameter monitoring, for instance by means of minimized drive tests (MDT) which automates monitoring by utilizing mobile nodes' reports, and parameter storing, for instance by means of radio environment maps (REMs) which built on reported measurements representing the state of the system in terms of some metrics, require access nodes with significantly higher computational and memory capacity and networks of unaffordable cost when densely deployed.

Moreover, an effective way to increase a cellular network's capacity beyond 4G's capabilities is by densification of the network's infrastructure. A denser radio access network infrastructure brings the network access points closer to the end user and implies a lower average path loss, thereby yielding a better the link budget, and a lower average number of mobile users served by each access point, thereby yielding more bandwidth to each user, both at possibly lower energy cost. The related art 3GPP standards organisation has already started to look into the integration of denser small-cell deployments within the current 4th generation of cellular architecture, the LTE system.

Furthermore, in ultra-dense networks the number of radio access nodes shall increase dramatically compared to today's radio access networks, and their spatial distribution may change significantly from region to region. Further, in ultra-dense networks the number of users is expected to also increase dramatically compared to today's systems, and their distribution and data traffic to change rapidly in time and across space. Therefore, today's methods for operating a radio access network and configuring the communication resources among the radio access nodes will not work efficiently.

One challenge associated with the spatial and time characteristics of an ultra-dense, sparse or mixed networks, is the effective management of system radio resources (e.g., time, spectrum and power) among spatially distributed radio access nodes based on a timely varying traffic. Therefore, one problem to be addressed is the optimization of the operation and the distribution of resources of a communication system in order to adapt to spatially- and time-varying demands for system resources. A second problem is to determine how to adaptively reallocate the system resources in time and space based on the time- and space-variation of the users' distribution and the associated traffic demands. When the system consists of a massive number of access points and users connected to the systems, a third problem for adapting the system operation to spatially- and time-varying demands for system resources is to find solutions that properly scale with the system dimension and reduce the computational complexity.

The methods and solutions of the prior art methods and communication systems are inadequate to provide the level of flexibility required to cope with the massive number of users, their increasing demand for data rate and connectivity, and the densification level of radio access networks envisioned for the near future. New methods are required to enable next generations of communication systems to flexibly reconfigure the allocation of network resources to the network access nodes to cope with variations in the traffic intensity, user mobility, etc., thereby shifting from cell-optimization methods to network-optimization methods.

GB2491362 A discloses a method for controlling communication resources in a cellular communication network (1), the cellular communication network comprising a plurality of cells (A to Q) which are under the control of at least one base station (10) and which use the communication resources to communicate via communication links, wherein a distance between two neighboring cells of the plurality of cells using a same communication resource is defined to be a re-use distance of said same communication resource.; In order to reduce inter-cell interference and thus to improve a signal to interference ratio for a user equipment in the inter-cell area, the method of aspect of the invention comprises: configuring a first setup of communication resources for a first cell (F) of said plurality of cells, and controlling the first cell to use a first set of communication resources indicated in the first setup by controlling the first cell to use a high load set of communication resources of the first set if a first load represented by a high load value is present at the first cell, and controlling the first cell to use a low load set of communication resources of the first set if a second load represented by a low load value is present at the first cell, wherein the first load is higher than the second load,; and wherein the re-use distance of at least one communication resource of the low load set is larger than the re-use distance of the at least one communication resource of the high load set. Consequently the signal to interference ratio in the inter-cell area is improved by varying re-use distances of communication resources in dependence on traffic load values.

WO 2012/040878 A1 discloses a method and a device for processing data in a mobile communication network, wherein a deployment information is distributed within a coverage area of a wide area system. Furthermore, a communication system is suggested comprising said device.

US 2003/186693 A1 discloses a method for estimating traffic distribution in a mobile communication network that includes collecting statistical information with regard to a quantity of communication traffic and with regard to a quality indicator associated with the traffic in a region served by the mobile communication network. The region is divided into areas belonging to respective traffic types. A respective traffic density is estimated for each of the traffic types based on the statistical information collected with regard to the quantity of the traffic and the quality indicator.

US 2011/105132 A1 discloses methods involving one or more mobile units, one or more macrocells providing wireless connectivity to one or more first coverage areas, and one or more femtocell providing wireless connectivity to one or more second coverage areas overlapping with the first coverage area(s). One embodiment of the method includes determining, at the femtocell(s), whether to transmit one or more beacon signal from the femtocell(s) on one or more carriers associated with the macrocell(s) based on whether mobile unit(s) are located within the first coverage area(s).

**Summary of the Invention**

An objective of the present invention is to provide a solution which mitigates or solves the drawbacks and problems of prior art solutions.

Another objective of the present invention is to provide a solution which reduces system resource scheduling complexity.

Yet another objective of the present invention is to provide a solution which provides improved system resource utilisation efficiency.

The present invention provides a method according to claim 1, a control node device according to claim 14 and a communication system according to claim 16. Any reference to inventions or embodiments not falling within the scope of the independent claims are to be interpreted as examples useful for understanding the invention.

According to a first aspect of the invention, the above mentioned and other objectives are achieved by a method for scheduling system resources in communication systems, the method comprising the steps of:

I) determining (100) a system resource density map (10) for a communication system based on at least one first system resource parameter (20) associated with the communication system, wherein said system resource density map (10) comprises at least one region of the communication system and assigns at least one portion of the system resources to said at least one region; and

II) determining (200) a resource scheduling (50) in said at least one region based on said system resource density map (10),

wherein resolutions of one or more dimensions of said system resource density map (10) are dynamically changing and said at least one first system resource parameter is a system resource in the group comprising: number of network nodes, number of antennas per network node, spatial distribution of network nodes, frequency spectrum, type of frequency spectrum, frequency spectrum per network node, transmit power per network node; transmitting/receiving characteristics of network nodes; and any combinations thereof,
wherein the resolution of the system resource density map is determined dynamically in any or in all of its dimensions adapting to distribution and system usage fluctuations in space, time and/or frequency.

According to a second aspect of the invention, the above mentioned and other objectives are achieved by a control node device comprising at least one processor (80) arranged to:

I) determine (100) a system resource density map (10) for a communication system based on at least one first system resource parameter (20) associated with the communication system, wherein said system resource density map (10) comprises at least one region of the communication system and assigns at least one portion of the system resources to said at least one region; and

II) determine (200) a resource scheduling (50) in said at least one region based on said system resource density map (10),

wherein resolutions of one or more dimensions of said system resource density map (10) are dynamically changing and said at least one first system resource parameter is a system resource in the group comprising: number of network nodes, number of antennas per network node, spatial distribution of network nodes, frequency spectrum, type of frequency spectrum, frequency spectrum per network node, transmit power per network node; transmitting/receiving characteristics of network nodes; and any combinations thereof,
wherein the resolution of the system resource density map is determined dynamically in any or in all of its dimensions adapting to distribution and system usage fluctuations in space, time and/or frequency.

According to a third aspect of the invention, the above mentioned and other objectives are achieved by a communication system comprising at least one control node device according to the present invention.

The present invention also relates to a computer program, characterized in code means, which when run by processing means causes said processing means to execute any method according to the present invention. Further, the invention also relates to a computer program product comprising a computer readable medium and said mentioned computer program, wherein said computer program is included in the computer readable medium, and comprises of one or more from the group: ROM (Read-Only Memory), PROM (Programmable ROM), EPROM (Erasable PROM), Flash memory, EEPROM (Electrically EPROM) and hard disk drive.

Determining the resources scheduling 50 based on the density map is an optimisation problem and can be

4

done in various ways by using any suitable system resource scheduling algorithm. In one embodiment, the gradient search algorithm can be used with the value(s) of the system resource density map 10 as input parameters to the resource scheduling algorithm. For each region the algorithm reads the resource density value for that region to identify the number of resources needed. The algorithm then generates an initial resource scheduling solution that employs as many resources as indicated by the density map for that specific region. The choice of the initial resources can be done in random or based to some relevant information, such as e.g., user distance from network node operating the system resource. The initial solution is evaluated and set both to as the current solution and as the best solution. The algorithm than continues with a loop, in which at each iteration step, one resource of the current solution is replaced by another resource resulting to a new solution. The new solution is evaluated and if it is better than the previous best solution then it is set both as the best solution and as the current solution, otherwise it is only set as the current solution for the next iteration step of the loop.

As an example in the case of an access node density map, the algorithm would per region activate as many access nodes, which initially would be chosen in random, as the number of access nodes for that region given in the density map 10. Then the algorithm would, at each iteration step, evaluate the performance of that network, e.g., by using capacity as its optimisation criterion for the evaluation, and generate a new solution by replacing one of the active access nodes with another inactive access node. The new solution is kept as the best solution if its capacity is better that the current solution. In whatever case, the new solution becomes the current solution for the next iteration loop. The algorithm may go on for a fixed number of iterations or until it converges to one access node scheduling solution that maximise capacity.

Some of the main benefits of the present invention are scalability, reduced computational complexity, and improved resource utilisation efficiency. An obvious advantage of the present invention is to benefit from the notion of density to implement an efficient and scalable system resource scheduling. In principle, the present invention copes with the complexity by dividing the optimization solution of the network resource allocation problem in two steps: a first step 100 that determines a portion (or density) of the system resources to be scheduled by determining a system resource density map; and a second step 200 that determines which system resources that should be scheduled based on said portion by using the system resource density map. Essentially, the first step prunes combination of resource allocation solutions to solutions of smaller sizes that can be easily solved by the second step.

Hence, the present invention copes with the optimization complexity of system resource scheduling by decomposing the combinatorial resource allocation problem in two tasks each of much lower complexity. Essentially, the first task computes the portion of system resources required e.g., for each region, and then uses the resulted portion to cut down the solution space to subsets that are easier to solve. The present invention thus adapts the system operation and the usage of the system resources to spatially-, time- and frequency-varying demands for system resources through algorithms that properly scale with the system dimension and reduce the computational complexity.

Yet another advantage of the present invention is to enable adapting the system operation and the use of the system resources and infrastructure to spatially- and time-varying traffic loads or demands for radio resources. In one example, the utilization of the system infrastructure, e.g., the number of network access nodes, the associated operating frequency bands, out power, etc. can be optimized in different regions of the communication system and at different time instances based on spatially- and time-varying traffic loads.

According to an embodiment of the method according to the invention, said system resource density map (10) is determined according to at least one system optimization criterion. The use of an optimization criterion allows for operation of the system according to specific system performance targets, and operation policies.

Said at least one first system resource parameter (20) is a system resource in the group comprising: number of network nodes, number of antennas per network node, spatial distribution of network nodes, frequency spectrum, type of frequency spectrum, frequency spectrum per network node, transmit power per network node; transmitting/receiving characteristics of network nodes; and any combinations thereof. The benefit of this embodiment is to relate the scheduled resource density to the geographical location of the system resources and their transmitting/receiving characteristics.

According to the above mentioned embodiment, said at least one first system resource parameter (20) is frequency spectrum, said system resource density map (10) is a frequency density map, and said resource scheduling (50) is frequency scheduling; or said at least one first system resource parameter (20) is spatial distribution of network nodes, said system resource density map (10) is a network node density map, and said resource scheduling (50) is network node scheduling; or said at least one first system resource parameter (20) is spatial distribution of network sensors, said system resource density map (10) is a network sensor density map, and said resource scheduling (50) is network sensor scheduling.

According to yet another embodiment of the method according to the invention, said system resource density map (10) and/or said resource scheduling (50) further is determined based on at least one second parameter (30; 40) characterising system users and/or system usage associated with the communication system. The resource scheduling will therefore adapt to the system users and/or the system usage.

According to yet another embodiment of the method according to the invention, said at least one second parameter (30; 40) is system requirements and/or statistics in the group comprising: system traffic, channel quality, required quality of service and/or experience, system performance, cost, and any combinations thereof. By using mentioned statistics good indication of the actual demand or requirements on the system can be obtained.

According to yet another embodiment of the method according to the invention, said at least one second parameter (30; 40) is system resource user requirements and/or statistics in the group comprising: spatial distribution and/or density, mobility, type of system resource user and user equipment, traffic demand, traffic load, quality of service and/or experience, and any combinations thereof. By using mentioned statistics good indicated of the actual demand or requirements from the system resource users can be obtained.

According to yet another embodiment of the method according to the invention, a size of said at least one region and/or resolutions of one or more dimensions of said system resource density map (10) are dynamically changing. The benefit of this embodiment is to enable optimizing the scheduled resource density in a region of the system and/or at a given time instance and/or at a given frequency band based on the demand for system resources in the system. Further, it would allow adapting the size of the system resource density map. For instance, at time instances when the traffic is rather low a lower resolution over time or space can be adopted. In this way the need of signalling density or resource scheduling reduces.

According to yet another embodiment of the method according to the invention, said at least one portion of the system resources is represented as an absolute value or as a fraction of the system resources. Therefore, simple representation of the system resources to be scheduled is provided.

According to yet another embodiment of the method according to the invention, the system resources are shared among a plurality of different system operators. The advantage of this is that the different system operators together can cooperate with the use of the system resources which is a scarce resource. Further, the shared system resources can be traded and negotiated between the system operators. Hence, another advantage with this embodiment is that the different system operators together can dynamically cooperate in the operation of the system resources for effective use of the scarce system communication resources.

According to yet another embodiment of the method according to the invention, wherein step I) is performed by at least one first control node (60) arranged to control a plurality of regions of the communication system, and step II is performed by at least one second control node (70) arranged to control and being associated with said at least one region. Thereby, a scalable solution is provided.

According to the above mentioned embodiment, the method further comprises the step of: signalling a part of said system resource density map associated with said at least one region to said at least one second control node (70).

According to yet another embodiment of the method according to the invention, the method further comprises the steps of: signalling said resource scheduling to one or more network nodes (80) associated with said at least one region; and scheduling, by said one or more network nodes (80), said at least one system resource according to said resource scheduling in said at least one region.

According to yet another embodiment of the method according to the invention, the method further comprises the step(s) of: receiving an indication of a resource scheduling according to step II and/or an indication of system resource usage in said at least one region, and updating said system resource density map (10) according to step I and further based on said indication of resource scheduling and/or said indication of system resource usage; and/or receiving an indication of system resource usage in said at least one region, and updating said resource scheduling (50) according to step II and further based on said indication of system resource usage. The feedback loops provide mechanisms for improving the resource scheduling.

Further applications and advantages of the invention will be apparent from the following detailed description.

**Brief Description of the Drawings**

The appended drawings are intended to clarify and explain different embodiments of the present invention, in which:

- Fig. 1 illustrates an embodiment of the present invention;
- Fig. 2 illustrates the processes at a density scheduler and a resource scheduler;
- Fig. 3 illustrates an embodiment with feedback loops;
- Fig. 4 illustrates an example of a hierarchical implementation of the present invention;
- Fig. 5 illustrates examples of different resolutions of the system resource density map;
- Fig. 6 illustrates other examples of different resolutions of the system resource density map;
- Fig. 7 shows an embodiment of a control node device according to the present invention; and
- Fig. 8 shows an alternative embodiment of a control node device according to the present invention.

**Detailed Description of the Invention**

To achieve the above mentioned and further objectives the present invention therefore relates to a method for scheduling system resources in communication systems. The communication system may be a wired or a wireless communication system, or a combination of wired and wireless communication systems. Examples of suitable communication systems in which the present invention can be implemented are LTE, wireless LAN (WLAN), Universal Mobile Telecommunications System (UMTS), Code Division Multiple Access (CDMA) 2000, Worldwide Interoperability for Microwave Access (WiMAX), wireless sensor networks, mobile ad-hoc networks (MANET), ultra-dense networks, backhaul, core networks, etc., but the present invention is not limited to the mentioned communication systems.

The present method comprises two major steps I) 100 and II) 200, namely:

I) determining 100 a system resource density map 10 for a communication system based on at least one first system resource parameter (20) associated with the communication system. Said system resource density map 10 according to the invention comprises at least one region of the communication system and assigns at least one portion of the system resources to said at least one region; and
II) determining 200 a resource scheduling 50 in/for said at least one region based on said system resource density map 10.

Thereby, the present invention provides a solution which mitigates or fully solves the drawbacks and problems of prior art solutions. Major improvements compared to prior art, e.g., relates to the scalable solution which leads to reduced computational complexity, and improved resource utilisation efficiency.

For example, compared to the SON the present invention can be described as a "joint scheduler" that effectively controls a multiplicity of network nodes. For instance, allocation in ultra-dense networks is difficult because the potential spectra-to-node allocation combinations increase exponentially as the number of spectral resources and the network nodes increase. The present invention should be seen as a scalable and more efficient solution to this combinatorial optimization problem, e.g., how many and which system resources among a multiplicity of spectrum segments should be allocated to which network node. In another example where the system resources correspond to radio blocks (RBs), the present invention constitutes an alternative solution to ICIC where RB allocation in step II is effectively computed based on the RB density map for a region of the communication system derived in step I.

Moreover, compared to REMs the present system resource density maps 10 have a different purpose. REMs are maps that are built on reported measurements or key performance indications (KPIs) representing the utilization of the system in space and/or time. To this end, a REM is a tool to read the system usage. In principle REMs purely illustrate the performance of a system's radio resources as compared to the present system resource density maps 10 which express targeted values and facilitate instructions how to allocate and utilize the radio resources. A REM corresponds to a description of how the system is used and how it performs, and doesn't indicate how the system should be used to achieve targeted (improved) performance, which is exactly what present system resource density map does.

In the context of present invention a system user is a user (e.g., device or entity) which interacts with the communication system to enable its operation and/or to utilize its functions/services. In general, system users authorized to change the way the system operates are often called system operators, or simply (network) operators. System resource users are users who utilize the system and use its resources but do not operate it (e.g., mobile nodes, UEs, user terminals, end user, actuators, etc.). System usage is any use by the system users or system resource users.

In a preferred embodiment of the invention, when the communication system refers to a radio access network the system resource parameter is the frequency spectrum, the system resource users are the mobile nodes, and the density scheduler outputs a frequency density map and the resource scheduler outputs which frequencies the network nodes should allocate to the mobile nodes in the form of frequency scheduling.

In another preferred embodiment of the invention when the communication system refers to a radio access network the system resource parameter is the spatial distribution of network access nodes and the system users are mobile nodes. This means that the density scheduler outputs a network access node density map and the resource scheduler output network access node scheduling. For example, the network access nodes may have active/de-active capabilities so that the network access nodes are switched on/off according to the network access node scheduling.

In yet another preferred embodiment of the invention, when the communication system refers to a wireless sensor network the system resource parameter is the network sensors, the system resource users are actuators and sensing information collector devices, and the density scheduler outputs a network sensor density map and the resource scheduler outputs a network sensor scheduling which sensors that should be used/activated or not in the region.

Further, the term system resources (or simply resources) of a communication system characterise the system deployment and infrastructure, e.g., the number and/or type of network nodes and their characteristics (e.g., power output, type and number of antennas, nominal capacity, backbone, etc.), and/or the communication media thereby characterising the medium resources, such as the radio resources e.g., time-frequency resources, frequency bands, etc.

Furthermore, in the present description the term network node is a generic term and refers to a system entity that is arranged to control and/or manage system resources in a communication system. The terms network access node (such as an access point or a base station), radio access node, or wireless access node are types of network nodes that provide network access.

Moreover, the term deployed or supportable system resources denotes system resources (e.g. aggregated resources) that the system provide for further processing and/or usage, whilst the term requested or demanded system resources denotes the amount of resources that are required from the system. Resource distribution and resource utilisation in a communication system can be represented per area and/or time and/or frequency, or any combinations thereof. Therefore, one can represent how densely system resources are deployed and/or utilized in a communication system in terms of a system resource density map where a point in the map is associated, for instance, with a geographical region of the communication system and/or time and/or frequency.

Furthermore, three kinds of system resource densities can be distinguished, namely:

- deployed resource density which is associated with system resources that a system possess and can provide for further processing or usage;
- scheduled resource density which is associated with resources, typically a subset of the deployed resources, that the system provides for further processing or usage by network nodes and/or system users; and
- utilised resource density which is associated with the system resources actually processed and/or used by system users.

Broadly, the density of the system resource density map is a quantity used to describe the degree of concentration of countable objects in a system with respect to one or more quantities of a multi-dimensional space. For instance, density can be defined in:

- space (per area unit) e.g., in $m^2$;
- time (per time unit) e.g., in ms;
- frequency (per frequency unit), e.g., in Hz; or
- any combinations thereof, e.g., per area and time, per area and frequency, per area and time, per area and frequency, etc.

In general, density can be used to relate the concentration of countable objects with respect to other countable objects. When countable objects correspond to system resources then this is referred to this as the system resource density. In the context of the present invention, system resource density can e.g., be expressed as the ratio:

$$\text{Resource density} = \underbrace{R_i/R_j/...}_{\substack{\text{quantities}\\\text{describing}\\\text{resource}\\\text{distribution}\\\text{aggregation}\\\text{(one or more}\\\text{at some order)}}} \Bigg/ \underbrace{D_s/D_t/D_f/....}_{\substack{\text{quantities}\\\text{describing}\\\text{dimensions}\\\text{(zero or more}\\\text{at any order)}}} \qquad (1),$$

Where $R_i$, $R_j$, ... represent system resource quantities while $D_s$, $D_t$, $D_f$, ... represent dimension quantities, i.e., a spatial quantity $D_s$, a quantity of time $D_t$, and a quantity of frequency $D_f$. Further examples of resource density include but are limited to:

(a) network nodes density per unit area, i.e., number of network nodes (NN) in a region of the communication network divided by the area A of that region [in $NN/m^2$];
(b) user density per unit area, i.e., the number N of mobile nodes (MN) in a region of the network divided by the area A of that region [$MN/m^2$];
(c) network density for a given region of the system i.e., the number of network nodes per mobile nodes in that region [NN/MN]; and
(d) network connectivity for a given region of the system, i.e., the number of potential connections between network nodes and mobile nodes in that region divided by the product of number of network nodes and the number of mobile nodes in that region.

In a broader sense, the $R_i$ and $R_j$ in equation (1) above may represent key performance metrics or other KPI quantities such as capacity/throughput (e.g., in bps), coverage (e.g., in outage probability), quality of service (QoS) (e.g., in guaranteed bit rate (GBR), or time delay), bandwidth (e.g., white-space), etc. For example, capacity density may be expressed as the relation between (aggregated) supportable capacity (in bps) by the system and the (aggregated) requested capacity (in bps) by the requesting entities, which can be specified for an (specific) area and/or for a (specific) time period. This effectively represents the capacity density per area unit and/or time unit, respectively. Similarly, coverage density is the relation between supportable coverage (in percentage) and requested coverage (in percentage) defined for an (specific) area and/or for a (specific) time period and/or frequency band. Equivalently, QoS density is the relation between supportable QoS and requested QoS (e.g., both in block-error rate), and lastly white-space density relates supportable (i.e., available) white-space (in Hz) to the demanded white-space (in Hz) over an area (in $km^2$) over a time interval (in sec) over a frequency band (in Hz).

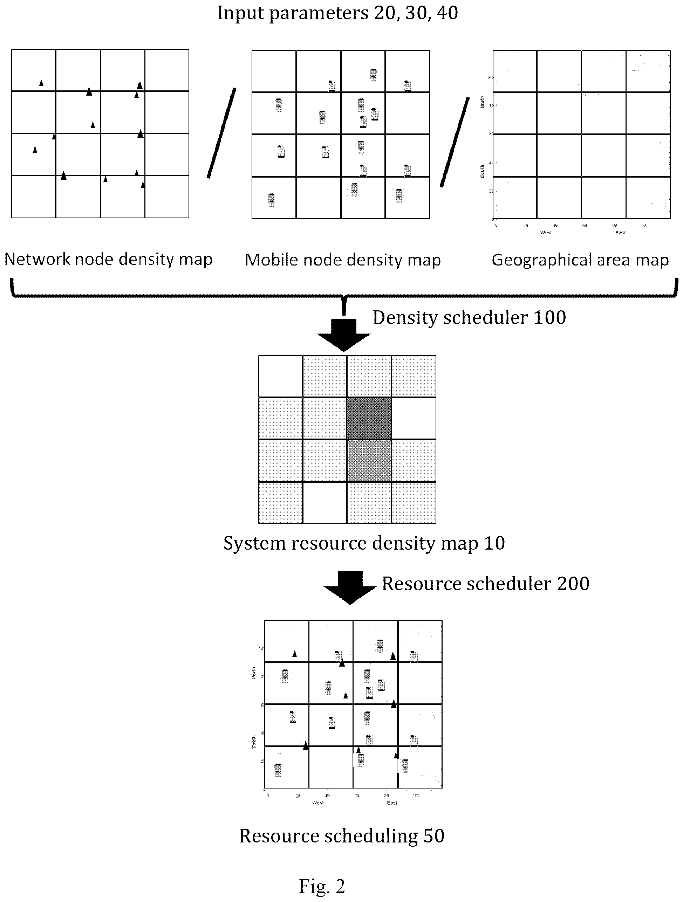

An example embodiment of the invention is illustrated in Fig. 2 which has the advantage to scale the network scheduling task down to the number of regions constituting a larger network area. It should be pointed out that input parameters network node density map, mobile node density map, and the geographical area in Fig. 2 corresponds to the $R_i$ $R_j$ and $D_s$ quantities of equation (1). The scheduled density map consists of k = 16 scheduled density values each corresponding to one of the non-overlapping regions and calculated as the ratio $R_{ik}/R_{jk}/D_{sk}$ where $R_{ik}$ $R_{jk}$ and $D_{sk}$ correspond to the network node density, mobile node density and the geographical area of the $k$th region in the map (that is, one calculation per region). The resource scheduling corresponds to a network node activation solution that has at each region $k$ density equal to $R_{ik}/R_{jk}/D_{sk}$.

In different applications of the present invention the system resource parameters can be represented as a radio density map where each point of the system resource density map is associated with a region of the system and/or a time instance and/or a frequency band. This radio density map may have the form of a system capacity density map where each point in the map corresponds to a density value representing e.g., the potential system capacity; the potential data rate supportable; the potential number of system users that can be served; etc. In another application of the present invention the system resource parameters can be represented as a coverage density map where each point in the map corresponds to a density value representing e.g., the system coverage; the requested coverage; the system outage; the targeted outage; the coverage of the system users by the system; the service outage; the user outage; etc. In yet another application of the present invention the system resource parameters can be represented as a QoS density map where each point in the map corresponds to a density value representing bits per second (in bps), transmission delay (in seconds), packet delay (in seconds), end-to-end delay, packet loss, packet error rate, block error rate (BLER), bit error rate (BER), service quality; QoS indicator; link-quality indicator; channel service quality; signal-to-interference-and-noise ratio; throughput (in bits per second); cell throughput; system throughput; user throughput; number of retransmissions; quality-of-experience (QoE); etc. In yet another application of the present invention the system resource parameters can be represented as a white-space density map where each point in the map corresponds to a density value representing available bandwidth in Hz), demanded bandwidth (in Hz); available white-space (in Hz), demanded white-space (in Hz); etc. The above embodiments allow expressing density in a variety of ways and in alignment to the optimization criterion/criteria of a system's usage.

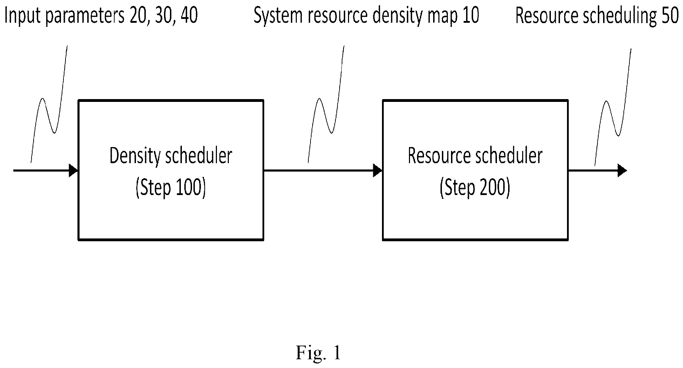

Fig. 1 illustrates an embodiment of the invention in which the system resources are allocated according to the two steps of the present invention: the first step 100 determines the system resource density map based on first 20 and second 30, 40 input parameters related to system resources, system users, and system usage, respectively, and is performed by a density scheduler. The second step 200 determines the resource scheduling 50 for a certain region of the communication system at a given time instance based on the system resource density map 10 obtained in the first step 100 and this is performed by a resource scheduler which uses values from the density map 10 outputs the resource scheduling 50 which e.g., can be signalled to one or more network nodes (NN) for further processing and scheduling. Hence, the method according to the present invention can be implemented by means of a density scheduler and a resource scheduler (system resource scheduling algorithm) as illustrated in Fig. 1.

The density scheduler determines a system resource density map 10, where a point in the system resource density map represents a portion of the system resources that is associated with, and shall be allocated in a certain region of the system (and/or time and/or frequency). Therefore, the resource density scheduler associates a resource density value with regions of the system, wherein the density value denotes a portion of the deployed system resources (e.g., how many system resources) that should be allocated rather than which exact system resources that should be allocated.

Hence, according to an embodiment of the present invention the portion of the system resources can be expressed either as an absolute quantity or as a fraction of the available system resources. In one example, the resource density represents the number of network nodes per unit area that should be utilized in a region of the system. In another example, the resource density represents the number of network nodes per mobile nodes (e.g., a User Equipment, UE) that should be used in a region of the system. In a further example, the resource density map 10 can be associated with certain frequency band(s) and or radio access technology.

The system resource density map 10 for a certain region of the system is determined on the basis of a suitable optimization criterion according to another embodiment of the invention. For instance, the optimization criterion may relate to, but are not limited to, interference target, coverage target, capacity target, quality of service target, white-space target, energy efficiency, etc., or any combinations thereof. The use of an optimization criterion allows for operation of the system according to specific system performance targets, and operation policies.

According to yet another embodiment of the invention the system resources correspond to spectrum segments (or component carriers) and the result or output of the resource scheduler 50 refers to activation of spectrum segments (i.e., component carriers) at the network nodes. This embodiment in its simplest form requires network nodes that can only activate/deactivate spectrum segments (i.e., component carriers). The more flexible case with network nodes supporting software-defined radio (SDR) is another embodiment of the invention.

According to yet another embodiment of the present invention, the system resource density map 10 is determined based on a set of parameters representing spatially distributed system resources comprising one or more in the group of: the number of network nodes; the number of antennas per network node; spatial distribution of the network nodes in the system (e.g. position and height) which constitute the network infrastructure; the given frequency spectrum in the system; the given types of frequency spectrum in the system; the given frequency spectrum per network node; the transmit power per network node; a set of transmitting/receiving characteristics of network nodes comprising e.g., antenna tilt angle, inter-antenna distance, etc. The benefit of this embodiment is to relate the scheduled resource density to the geographical location of the system resources and their transmitting/receiving characteristics. However, other parameters relating to the cost associated with the usage of each resource type and/or resource unit can be considered when determining the system resource density map. For example to cost associated to the provisioning of the system resources, such as the energy (power) consumed or the licensed spectrum required. Energy and spectrum are parameters that are associated to OPEX (operating expenditures) and CAPEX (capital expenditures).

In a further embodiment of the invention the system resources relate to, or are associated with at least one certain region of the communication system and/or at least one time interval and/or frequency band. Therefore, one advantage of this method is to allow determining a portion of the system resources to be made available in a certain region of the system at a certain time. The portion of the system resources could represent, for instance a portion of the deployed system infrastructure in the region, such as radio access nodes, the number of antennas, etc., or a portion of the system resources in a more conventional way, e.g., a portion of the system frequency spectrum, a portion of the antenna(s), etc.

According to yet another embodiment of the invention, at least one set of input parameters representing spatially distributed system resources is represented in the form of a multi-dimensional density map, i.e., a deployed resource density map. Each point of the map may represent the deployed system's resources in different regions of the system and/or for different time and/or for different frequency bands. For instance, the deployed resource density map may represent one or more in the group of: the concentration of the deployed network nodes per unit area; the concentration of network nodes per unit area operating in a certain frequency band and/or a certain radio access technology; the concentration of the network nodes with respect to the mobile nodes present in a given area; the distribution of power per unit area offered by the network, etc. Thereby, an advantage of this method is to provide a compact representation of the deployed system resources with respect to one or more dimensions, such as space, time, and frequency.

According to a further embodiment of the invention the system resource density map 10 and/or the resource scheduling 50 further is determined based on at least one second parameter 30; 40 characterising system users and/or system usage associated with the communication system. Hence first and second parameters are used. The second parameters may relate to one or more in the group of system requirements and/or statistics comprising: system traffic, channel quality, required quality of service and/or experience, system performance (such as capacity/throughput (e.g., in bps), coverage (e.g., in outage probability), QoS (e.g., in guaranteed bit rate (GBR), or time delay), bandwidth (e.g., white-space), etc), or any combinations thereof. However, the second parameters may also relate to one or more parameters in the group of system user requirements and/or statistics comprising: spatial distribution and density, mobility, type of system resource user and user equipment, traffic, quality of service and/or experience, or any combinations thereof. It is also possible and can be advantage to consider both system statistics and system resource user statistics when determining the second parameters. An advantage of this embodiment is to provide a compact representation of the second parameters with respect to one or more dimensions, such as space, time, and frequency.

Furthermore, spatial and temporal distribution of the set of first and second input parameters (system resources, system users, system usage) can be represented in the form of multi-dimensional map (not the system resource density map), where each point of the map is associated with a spatial location (space) and/or time instance (time) and/or frequency band (frequency), while the corresponding value in the map may represents the demand for system resources at said location and/or time and/or frequency. Therefore, the dimensions of the system resource density map 10 correspond to the dimensions of the input parameters according to an embodiment of the invention. This is a simple way of implementing the invention.

In another embodiment of the invention it is possible that changes in the system resource density map 10 occur due to an ad-hoc network deployment. In such dynamic network deployments access nodes, such as mobile relays, or devices with device-to-device communication capabilities may dynamically appear and/or disappear resulting to updates on the second parameters related to actual deployment.

In yet another embodiment of the invention, depending on the resolution the system resource density map 10 may comprise either one single density value for the entire area of all regions of the communication system for a time interval and for a given frequency band or a multiplicity of density values each corresponding to a different regions, time instances and frequencies. It is expected though that the resolution of the resource density map can be defined dynamically and depending on the fluctuation rates of the supportable and the requested resources.

According to a further embodiment of the invention, the resource scheduler (step 200) determines the allocation of the system resources for at least one region of the communication system and/or a time instance and/or for at least a frequency band based on the system resource density map 10 and one or more of the second parameters 30, 40. The benefit of this embodiment is to adapt the morphology of the system in time, space and frequency depending on the second parameters representing system users and/or system usage.

The resolution of the density map 10 is determined dynamically in any or in all of its dimensions adapting to distribution and system usage fluctuations in space, time and frequency, and as the result of an optimization process. As an example, the time resolution interval may adapt to time intervals characterizing different time zones of the day in the region where the values of resource density map's points within the time intervals remains unchanged. As another example, spatial resolution may adapt to the mobile node distribution where the area of each sub-region correspond to the size of clusters associated to the system resource user distribution in the region. As another example, frequency band resolution may adapt to the frequency bands provided by the existing radio access technologies in the region covered by the system resource density map.

In a further embodiment of the invention, the size of each individual region or time interval or a frequency may be optimized in accordance to an objective function used to quantitatively express the optimization criterion. For instance, by dividing the area of the communication system into regions that have maximum system resource density will result in fewer regions in the scheduled density map to be conveyed to the resource scheduler compressing the information to be exchanged between the density scheduler and the resource scheduler. It would allow adapting the size of the system resource density map. For instance, at time instances when the traffic is rather low a lower resolution over time or space can be adopted. In this way the need of signalling density maps or resource scheduling reduces.

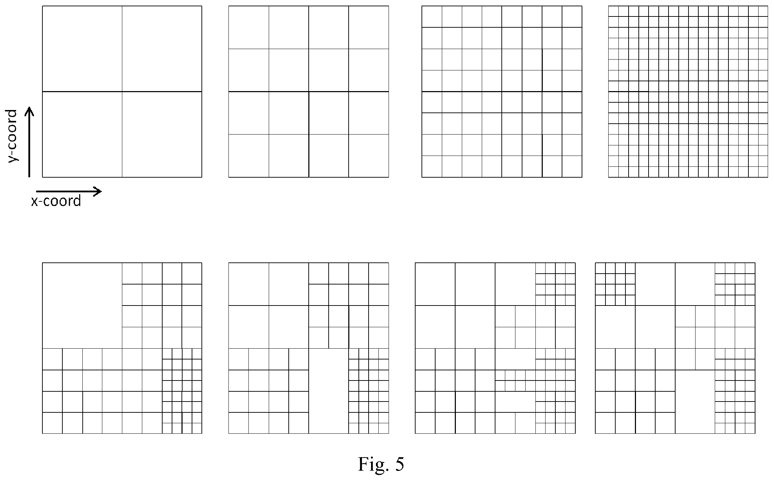

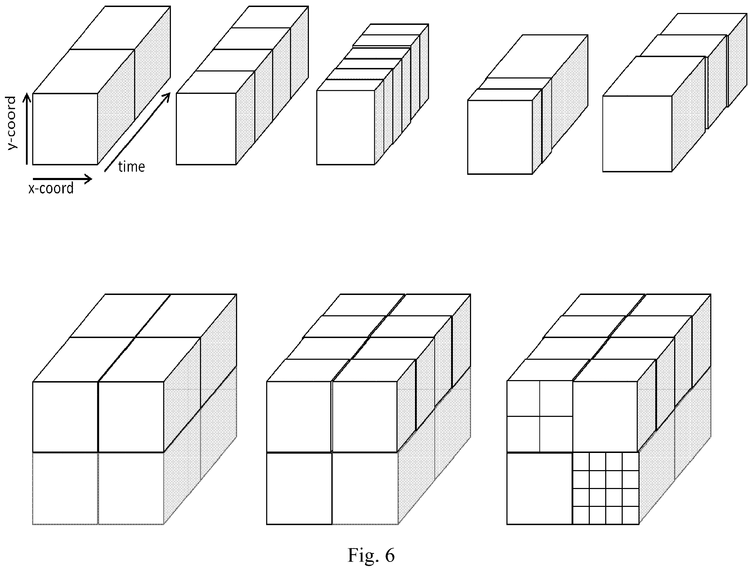

Fig. 5 and 6 illustrates examples of different resolutions of the system resource density map 10. The upper drawings of Fig. 5 illustrates different spatial resolution of the density map in which all regions are of equal size whilst the lower drawings of Fig. 5 illustrates different spatial resolution of the density map in which the regions may have different sizes. The upper drawings of Fig. 6 illustrates regions of the same size having the same or different time resolutions (time intervals) whilst the lower drawings of Fig. 6 illustrates multiple regions of the same or different sizes having the same or different time resolutions (time intervals).

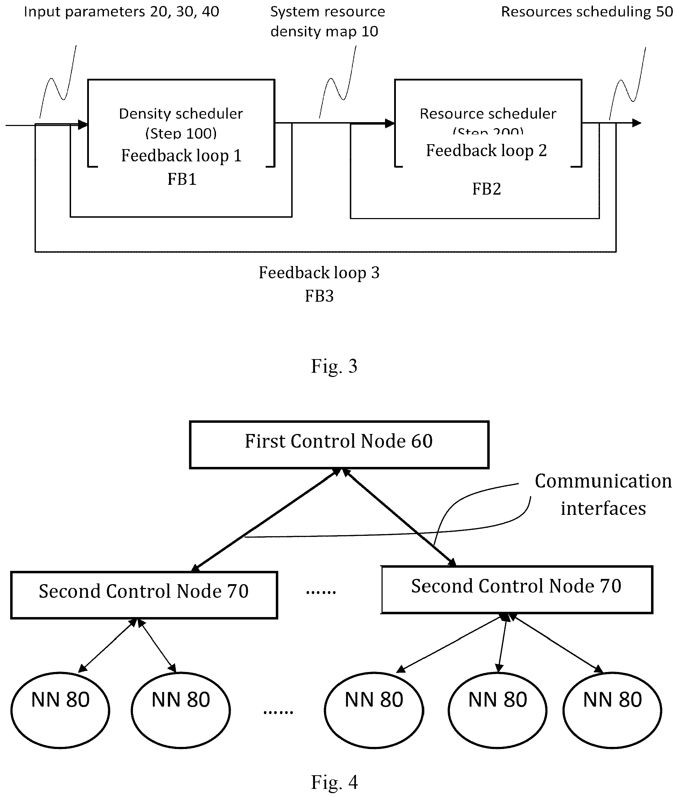

According to yet another embodiment of the invention the output of the system resource density map 10 and/or the resource scheduling 50, respectively, can be updated in an adaptive way so as to adapt them to feedback information received in feedback loops. In particular, the method can be implemented by means of first, second and/or third feedback loops which are illustrated in Fig. 3.

The first feedback loop FB1 carries an indication of system resource density, for the at least one region of the system at a certain time instance, to the density scheduler which updates/adapts the system resource density map 10 accordingly. The first feedback loop enables to determine the system resource density at a time instance based on the system resource density for the at least one region of the system at a previous time instance.

The second feedback loop FB2 carries an indication of system resource usage, e.g., as represented by an utilised density map for the at least one region of the system at a certain time instance, from one or more network nodes to the resource scheduler which updates/adapts the resource scheduling 50 accordingly. The second feedback loop enables to determine the resource scheduling at a time instance based on a system resource usage for the at least one region of the system at a previous time instance.

The second feedback loop FB2 may also carry an indication of resource scheduling, for the at least one region of the system at a certain time instance, to the resource scheduler which updates/adapts the resource scheduling 50 accordingly. The second feedback loop enables to determine the resource scheduling at a time instance based on a resource scheduling for the at least one region of the system at a previous time instance.

The third feedback loop FB3 carries an indication of a resource scheduling for at least one region of the system (e.g., at a certain time instance) from the resource scheduler to the density scheduler which receives the indication of the resource scheduling and updates/adapts the system resource density map 10 accordingly. The third feedback loop enables to determine the system resource density map 10 at a certain time instance based on a resource scheduling for the at least one region of the system at a previous time instance.

The third feedback loop FB3 may also carry an indication of system resource usage for at least a region of the system at a certain time instance, from one or more network nodes to the density scheduler which updates/adapts the system resource density map 10 accordingly. The third feedback loop enables the network nodes to forward additional feedback on the satisfaction of the allocated resources in e.g., terms of an utilised density map to the density scheduler.

Any of the above mentioned feedback loops FBI, FB2, FB3 may cover one or multiple regions, one or multiple time instants, and/or one or multiple frequency bands. Therefore, the present method can adapt to feedback information for improved performance and resource allocation.

In a further embodiment of the invention relating to feedback, the system resource density and/or the resource scheduling for at least a region of the system and/or a time instance are further determined on the basis of at least one or more parameters in the group comprising: system resource density for at least one region of the system in a previous time instance; resource scheduling for at least one region of the system in a previous time instance; system resource density in other regions of the system at a previous time instance; resource scheduling in other regions of the system at a previous time instance; system usage performance for the at least one region of the system and/or other regions of the system at a previous time instance.

In a further embodiment of the invention, the operation of the density scheduler and the operation of resource scheduler may be performed at the same or different time scales. The benefit of this method when operating on different time scales is that it allows for the density scheduler to operate on input parameters as described by second order statistics while the resource scheduler cope with instantaneous changes in resource demand.

In another embodiment of the invention, as illustrated in Fig. 4, the density scheduler (performing step 100) can be performed by at least one first control node 60 that is arranged to control a plurality of regions of the system, such as a network management function, gateway or central network controller. The resource scheduler (performing step 200) on the other hand may be implemented regionally/locally by at least one second control node 70, such as a cluster controller, an eNodeB or other controller entity, which is arranged to control the at least one region of the system. The second control node is arranged to control e.g. a plurality of network nodes (NN) 80 and is associated with the at least one region. A density scheduler (the first control node) may communicate its output to one or a multiplicity of resource schedulers (the second control nodes) via suitable communication interfaces (wireless or wired) which should be clear to the skilled person. It should however be noted that the functions of density scheduler and resource scheduler can be performed in a single control node according to another embodiment of the invention.

According to yet another embodiment of the invention, the system resources are shared among a plurality of different independent system operators and the present method may therefore as input use further additional input parameters specific to each of the system operators so as to adapt the present method to the specific operator's conditions and preferences. The additional parameters relevant to a system operator may relate to but are not limited to one or more in the group of: a demand of system resources for a system operator; allocation of system resources for a system operator; usage of system resources by a system operator; cost of system resources for a system operator; a request for system resources by a system operator; an excess of system resources at a system operator; an offer of system resources by a system operator; etc., or any combinations thereof.

Therefore, the present invention further discloses a method to allocate system resources to a plurality of system operators. The advantage of this is that the different system operators together can cooperate with the use of the system resources which is a scarce resource. Further, the shared system resources can be traded and negotiated between the system operators. Hence, another advantage with this embodiment is that the different system operators together can dynamically cooperate in the operation of the system resources for effective use of the scarce system communication resources.

According to yet another embodiment of the invention the resource scheduler may correspond to a hierarchical cell planner or access-point scheduler which schedules the tiers or the access points to be activated for covering an area as determined by the density scheduler and communicated by means of a network planning density map. For instance, a hierarchical cell scheduler where the density scheduler determines how many tiers should be powered on in an area and where the resource scheduler determines which cells should be powered on.

According to yet another embodiment of the invention the resource scheduler may correspond a spectrum re-farming scheduler which reshapes the spectrum to be used in an area as determined by the density scheduler and communicated by means of a spectrum density map. Spectrum re-farming or dynamic spectrum re-farming scheduler is the abolition of existing frequency band allocations in the radio spectrum and the more efficient reallocation of the spectrum into smaller bands.

According to yet another embodiment of the invention the communication system is a sensor network. The resource scheduler may correspond to a network sensor scheduler that schedules network sensors (of any type) to be activated for sensing an area as determined by the density scheduler and communicated by means of a sensor density map. For instance, a fire-sensor scheduler where the density scheduler determines how many sensors that should be powered on in a region and where the resource scheduler determines which sensors should be powered on in case of fire or increasing/decreasing temperature.

According to yet another embodiment of the invention the resource scheduler may correspond to a video surveillance scheduler that schedules the cameras to be activated for monitoring an area as determined by the density scheduler and communicated by means of a camera density map. For instance, a surveillance scheduler where the density scheduler determines how many cameras that should be powered on and for how long time in a region and where the resource scheduler determines which cameras should be powered on in case of an increase/decrease in activity in the monitored area.

Moreover, as understood by the person skilled in the art, any method according to the present invention may also be implemented in a computer program, having code means, which when run by processing means causes the processing means to execute the steps of the method. The computer program is included in a computer readable medium of a computer program product. The computer readable medium may comprises of essentially any memory, such as a ROM (Read-Only Memory), a PROM (Programmable Read-Only Memory), an EPROM (Erasable PROM), a Flash memory, an EEPROM (Electrically Erasable PROM), or a hard disk drive.

Furthermore, the present method can be implemented and executed in suitable control node device(s). It is realized by the skilled person that the present control node device(s) may comprise the necessary communication capabilities in the form of e.g., functions, means, units, elements, etc., for executing the methods according to the invention which means that the devices can be modified, *mutatis mutandis*, according to any method of the present invention. Examples of other such means, units, elements and functions are: memory, encoders, decoders, mapping units, multipliers, interleavers, deinterleavers, modulators, demodulators, inputs, outputs, antennas, amplifiers, interfaces, DSPs, MSDs, TCM encoder, TCM decoder, etc. which are suitably arranged together.

Especially, the processors of the present devices may comprise, e.g., one or more instances of a central processing unit (CPU), a processing unit, a processing circuit, a processor, an application specific integrated circuit (ASIC), a microprocessor, or other processing logic that may interpret and execute instructions. The expression "processor" may thus represent a processing circuitry comprising a plurality of processing circuits, such as, e.g., any, some or all of the ones mentioned above. The processing circuitry may further perform data processing functions for inputting, outputting, and processing of data comprising data buffering and device control functions, such as call processing control, user interface control, or the like.

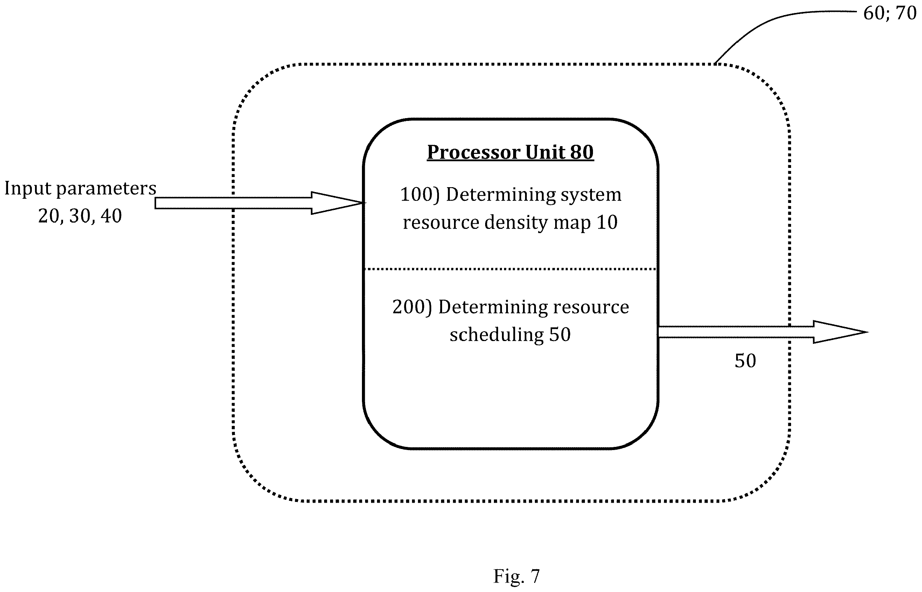

The present control node device comprises at least one processor which is arranged to execute the method in the control node device according to the present invention. This embodiment of the invention is illustrated in Fig. 7 in which the control node device 60, 70 comprises at least one processor 80 arranged for executing the present method. First and second input parameters 20, 30, and 40 are received and a system resource density map 10 is determined in step 100 by the processor unit. Thereafter, the resource scheduling 50 is determined by the processor unit in step 200 and outputted to be used for further processing and/or scheduling of system resources in the region(s) of the communication system. It is noted that the control node device may be implemented as a single device or as a distributed device in which steps 100 and 200 are performed in different locations in the network e.g., by first 60 and second 70 control nodes.

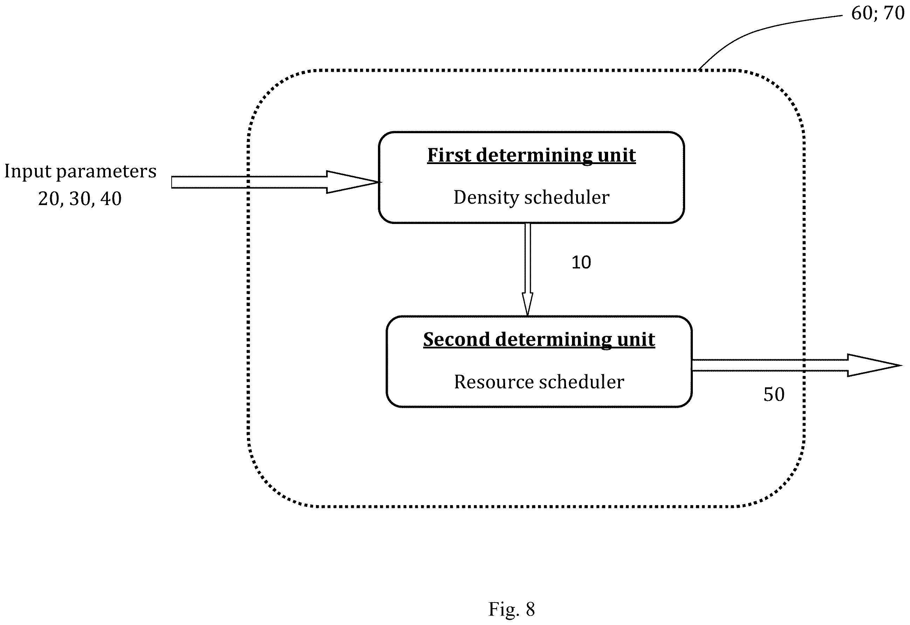

Alternatively, according to another embodiment of the invention the present control node device comprises dedicated units for the performance of the present method steps. This embodiment is illustrated in Fig. 8 in which the transmitter device comprises dedicated units, suitably connected to each other, for the corresponding method steps. The device according to this embodiment comprises a first determination unit (density scheduler) arranged to determine the system resource density map 10 based on first and second input parameters 20, 30 and 40 e.g., received with a input unit. The device further comprises a second determination unit (resource scheduler) arranged to determine a resources scheduling 50 based on the system resource density map 10 received from the density scheduler. Thereafter, the second determination unit outputs with an output unit the resource scheduling 50 to be used for further processing and/or scheduling of system resources in the region(s) of the communication system.

As mentioned above, it should be noted that the present control node device may be implemented in a single control node which means that steps 100 (the density scheduler) and 200 (the resource scheduler) are performed and executed in the single (control unit) of a communication system. However, according to another preferred embodiment of the invention, steps I and II are performed in two separate (control) units located in different places of the communication system, e.g., in first central control node and a second local control node as described above and which are illustrated in Fig. 4. The first control node may be, but is not limited to: a management node, radio network controller, a base station, network node, service gateway, etc.; whilst the second control node may be, but is not limited to: a radio network controller, a base station, an access point, a network node, a pico base station, etc.

Finally, it should be understood that the present invention is not limited to the embodiments described above, but also relates to and incorporates all embodiments within the scope of the appended independent claims.

**Claims**

1. Method for determining system resources scheduling in communication systems, the method comprising the steps of:

    I) determining (100) a system resource density map (10) for a communication system based on at least one first system resource parameter (20) associated with the communication system, wherein said system resource density map (10) comprises at least one region of the communication system and assigns at least one portion of the system resources to said at least one region; and

II) determining (200) a resource scheduling (50) in said at least one region based on said system resource density map (10),

**characterized in that** resolutions of one or more dimensions of said system resource density map (10) are dynamically changing and said at least one first system resource parameter is a system resource in the group comprising: number of network nodes, number of antennas per network node, spatial distribution of network nodes, frequency spectrum, type of frequency spectrum, frequency spectrum per network node, transmit power per network node; transmitting/receiving characteristics of network nodes; and any combinations thereof, wherein the resolution of the system resource density map is determined dynamically in any or in all of its dimensions adapting to distribution and system usage fluctuations in space, time and/or frequency.

2. Method according to claim 1, wherein said system resource density map (10) is determined according to at least one system optimization criterion.

3. Method according to claim 1 or 2, wherein:

said at least one first system resource parameter (20) is frequency spectrum, said system resource density map (10) is a frequency density map, and said resource scheduling (50) is frequency scheduling; or said at least one first system resource parameter (20) is spatial distribution of network nodes, said system resource density map (10) is a network node density map, and said resource scheduling (50) is network node scheduling; or said at least one first system resource parameter (20) is spatial distribution of network sensors, said system resource density map (10) is a network sensor density map, and said resource scheduling (50) is network sensor scheduling.

4. Method according to any of the preceding claims, wherein said system resource density map (10) and/or said resource scheduling (50) further is determined based on at least one second parameter (30; 40) characterising system users and/or system usage associated with the communication system.

5. Method according to claim 4, wherein said at least one second parameter (30; 40) is system requirements and/or statistics in the group comprising: system traffic, channel quality, required quality of service and/or experience, system performance, cost, and any combinations thereof.

6. Method according to claim 4 or 5, wherein said at least one second parameter (30; 40) is system resource user requirements and/or statistics in the group comprising: spatial distribution and/or density, mobility, type of system resource user and user equipment, traffic demand, traffic load, quality of service and/or experience, and any combinations thereof.

7. Method according to any of the preceding claims, wherein a size of said at least one region are dynamically changing.

8. Method according to any of the preceding claims, wherein said at least one portion of the system resources is represented as an absolute value or as a fraction of the system resources.

9. Method according to any of the preceding claims, wherein the system resources are shared among a plurality of different system operators.

10. Method according to any of the preceding claims, wherein step I is performed by at least one first control node (60) arranged to control a plurality of regions of the communication system, and step II is performed by at least one second control node (70) arranged to control and being associated with said at least one region.

11. Method according to claim 10, further comprising the step of: signalling a part of said system resource density map (10) associated with said at least one region to said at least one second control node (70).

**12.** Method according to any of preceding claims, further comprising the steps of:

signalling said resource scheduling (50) to one or more network nodes (80) associated with said at least one region; and
scheduling, by said one or more network nodes (80), system resources according to said resource scheduling (50) in said at least one region.

**13.** Method according to any of the preceding claims, further comprising the step(s) of:

receiving an indication of a resource scheduling according to step II and/or an indication of system resource usage in said at least one region, and updating said system resource density map (10) according to step I and further based on said indication of resource scheduling and/or said indication of system resource usage; and/or receiving an indication of system resource usage in said at least one region, and updating said resource scheduling (50) according to step II and further based on said indication of system resource usage.

**14.** Control node device (60; 70) comprising at least one processor (80) which is arranged to:

I) determine (100) a system resource density map (10) for a communication system based on at least one first system resource parameter (20) associated with the communication system, wherein said system resource density map (10) comprises at least one region of the communication system and assigns at least one portion of the system resources to said at least one region; and
II) determine (200) a resource scheduling (50) in said at least one region based on said system resource density map (10),

**characterized in that** resolutions of one or more dimensions of said system resource density map (10) are dynamically changing and said at least one first system resource parameter (20) is a system resource in the group comprising: number of network nodes, number of antennas per network node, spatial distribution of network nodes, frequency spectrum, type of frequency spectrum, frequency spectrum per network node, transmit power per network node; transmitting/receiving characteristics of network nodes; and any combinations thereof,
wherein the resolution of the system resource density map is determined dynamically in any or in all of its dimensions adapting to distribution and system usage fluctuations in space, time and/or frequency.

**15.** Control node device (60; 70) according to claim 14, wherein the at least one processor (80) further being arranged to carry out any of the claims 2-13.

**16.** Communication system comprising at least one control node device according to any of the claim 14 or 15.

**Patentansprüche**

**1.** Verfahren zum Bestimmen einer Systemressourcenplanung in Kommunikationssystemen, wobei das Verfahren die folgenden Schritte umfasst:

I) das Bestimmen (100) einer Systemressourcendichtekarte (10) für ein Kommunikationssystem auf Grundlage mindestens eines ersten Systemressourcenparameters (20) in Zusammenhang mit dem Kommunikationssystem, wobei die Systemressourcendichtekarte (10) mindestens einen Bereich des Kommunikationssystems umfasst und dem mindestens einen Bereich mindestens einen Teil der Systemressourcen zuweist; und
II) das Bestimmen (200) einer Ressourcenplanung (50) in dem mindestens einen Bereich auf Grundlage der Systemressourcendichtekarte (10),

**dadurch gekennzeichnet, dass** sich Auflösungen einer oder mehrerer Dimensionen der Systemressourcendichtekarte (10) dynamisch ändern und der mindestens eine erste Systemressourcenparameter eine Systemressource in der Gruppe ist, die umfasst: Anzahl von Netzwerkknoten, Anzahl von Antennen pro Netzwerkknoten, räumliche Verteilung von Netzwerkknoten, Frequenzspektrum, Art des Frequenzspektrums, Frequenzspektrum pro Netzwerkknoten, Sendeleistung pro Netzwerkknoten; Sende-/Empfangseigenschaften von Netzwerkknoten; und jegliche Kombinationen davon,
wobei die Auflösung der Systemressourcendichtekarte in einer oder in allen ihrer Dimensionen dynamisch bestimmt wird, dich sich an Verteilung und Systemnutzungsschwankungen in Raum, Zeit und/oder Frequenz anpassen.

**2.** Verfahren nach Anspruch 1, wobei die Systemressourcendichtekarte (10) gemäß mindestens einem Systemoptimierungskriterium bestimmt wird.

**3.** Verfahren nach Anspruch 1 oder 2, wobei:

der mindestens eine erste Systemressourcenparameter (20) Frequenzspektrum ist, die Systemressourcendichtekarte (10) eine Frequenzdichtekarte ist und die Ressourcenplanung (50) Frequenzplanung ist; oder
der mindestens eine erste Systemressourcenparameter (20) räumliche Verteilung von Netzwerkknoten ist, die Systemressourcendichtekarte (10) eine Netzwerkknotendichtekarte ist und die Ressourcenplanung (50) Netzwerkknotenplanung ist; oder
der mindestens eine erste Systemressourcenparameter (20) räumliche Verteilung von Netzwerksensoren ist, die Systemressourcendichtekarte (10) eine Netzwerksensordichtekarte ist und die Ressourcenplanung (50) Netzwerksensorplanung ist.

**4.** Verfahren nach einem der vorhergehenden Ansprüche, wobei die Systemressourcendichtekarte (10) und/oder die Ressourcenplanung (50) ferner auf Grundlage mindestens eines zweiten Parameters (30; 40) bestimmt werden, der Systembenutzer und/oder Systemnutzung in Zusammenhang mit dem Kommunikationssystem kennzeichnet.

**5.** Verfahren nach Anspruch 4, wobei der mindestens eine zweite Parameter (30; 40) Systemanforderungen und/oder Statistiken in der Gruppe sind, die umfasst: System-"Traffic", Kanalqualität, erforderliche "Quality of Service" und/oder "Quality of Experience", Systemleistung, Kosten und jegliche Kombinationen davon.

**6.** Verfahren nach Anspruch 4 oder 5, wobei der mindestens eine zweite Parameter (30; 40) Systemressourcenbenutzeranforderungen und/oder Statistiken in der Gruppe sind, die umfasst: räumliche Verteilung und/oder Dichte, Mobilität, Art von Systemressourcenbenutzer und Teilnehmergerät, "Traffic"-Bedarf, "Traffic"-Last, "Quality of Service" und/oder "Quality of Experience" und jegliche Kombinationen davon.

**7.** Verfahren nach einem der vorhergehenden Ansprüche, wobei sich eine Größe des mindestens einen Bereichs dynamisch ändert.

**8.** Verfahren nach einem der vorhergehenden Ansprüche, wobei der mindestens eine Teil der Systemressourcen als ein Absolutwert oder als ein Anteil der Systemressourcen dargestellt ist.

**9.** Verfahren nach einem der vorhergehenden Ansprüche, wobei die Systemressourcen unter einer Mehrzahl unterschiedlicher Systemoperatoren geteilt werden.

**10.** Verfahren nach einem der vorhergehenden Ansprüche, wobei Schritt I von mindestens einem ersten Steuerknoten (60) durchgeführt wird, der dafür ausgebildet ist, eine Mehrzahl von Bereichen des Kommunikationssystems zu steuern, und
Schritt II von mindestens einem zweiten Steuerknoten (70) durchgeführt wird, der dafür ausgebildet ist, den mindestens einen Bereich zu steuern und mit diesem in Zusammenhang zu stehen.

**11.** Verfahren nach Anspruch 10, das ferner den folgenden Schritt umfasst:
das Signalisieren eines Teils der Systemressourcendichtekarte (10) in Zusammenhang mit dem mindestens einen Bereich an den mindestens einen zweiten Steuerknoten (70).

**12.** Verfahren nach einem der vorhergehenden Ansprüche, das ferner die folgenden Schritte umfasst:

das Signalisieren der Ressourcenplanung (50) an einen oder mehrere Netzwerkknoten (80) in Zusammenhang mit dem mindestens einen Bereich; und
das Planen von Systemressourcen gemäß der Ressourcenplanung (50) in dem mindestens einen Bereich durch den einen oder die mehreren Netzwerkknoten (80).

**13.** Verfahren nach einem der vorhergehenden Ansprüche, das ferner den folgenden Schritt (die folgenden Schritte) umfasst:

das Empfangen einer Angabe einer Ressourcenplanung gemäß Schritt II und/oder einer Angabe von Systemressourcennutzung in dem mindestens einen Bereich und das Aktualisieren der Systemressourcendichtekarte (10) gemäß Schritt I und ferner auf Grundlage der Angabe einer Ressourcenplanung und/oder der Angabe von Systemressourcennutzung; und/oder

das Empfangen einer Angabe von Systemressourcennutzung in dem mindestens einen Bereich und das Aktualisieren der Ressourcenplanung (50) gemäß Schritt II und ferner auf Grundlage der Angabe von Systemressourcennutzung.

14. Steuerknotenvorrichtung (60; 70), die mindestens einen Prozessor (80) aufweist, der dafür ausgebildet ist:

I) eine Systemressourcendichtekarte (10) für ein Kommunikationssystem auf Grundlage mindestens eines ersten Systemressourcenparameters (20) in Zusammenhang mit dem Kommunikationssystem zu bestimmen (100), wobei die Systemressourcendichtekarte (10) mindestens einen Bereich des Kommunikationssystems umfasst und dem mindestens einen Bereich mindestens einen Teil der Systemressourcen zuweist; und
II) eine Ressourcenplanung (50) in dem mindestens einen Bereich auf Grundlage der Systemressourcendichtekarte (10) zu bestimmen (200),

dadurch gekennzeichnet, dass sich Auflösungen einer oder mehrerer Dimensionen der Systemressourcendichtekarte (10) dynamisch ändern und der mindestens eine erste Systemressourcenparameter (20) eine Systemressource in der Gruppe ist, die umfasst: Anzahl von Netzwerkknoten, Anzahl von Antennen pro Netzwerkknoten, räumliche Verteilung von Netzwerkknoten, Frequenzspektrum, Art des Frequenzspektrums, Frequenzspektrum pro Netzwerkknoten, Sendeleistung pro Netzwerkknoten; Sende-/Empfangseigenschaften von Netzwerkknoten; und jegliche Kombinationen davon,
wobei die Auflösung der Systemressourcendichtekarte in einer oder in allen ihrer Dimensionen dynamisch bestimmt wird, dich sich an Verteilung und Systemnutzungsschwankungen in Raum, Zeit und/oder Frequenz anpassen.

15. Steuerknotenvorrichtung (60; 70) nach Anspruch 14, wobei der mindestens eine Prozessor (80) ferner dafür ausgebildet ist, einen der Ansprüche 2-13 auszuführen.

16. Kommunikationssystem, das mindestens eine Steuerknotenvorrichtung nach einem der Ansprüche 14 oder 15 aufweist.

## Revendications

1. Procédé pour déterminer la planification de ressources de système dans des systèmes de communication, le procédé comprenant les étapes de :

I) détermination (100) d'une carte de densité de ressources de système (10) pour un système de communication sur la base d'au moins un premier paramètre de ressources de système (20) associé au système de communication, ladite carte de densité de ressources de système (10) comprenant au moins une région du système de communication et attribuant au moins une partie des ressources de système à ladite au moins une région ; et
II) détermination (200) d'une planification de ressources (50) dans ladite au moins une région sur la base de ladite carte de densité de ressources de système (10), caractérisé en ce que les résolutions d'une ou de plusieurs dimensions de ladite carte de densité de ressources de système (10) changent de manière dynamique et ledit au moins un premier paramètre de ressources de système est une ressource de système dans le groupe comprenant : le nombre de nœuds de réseau, le nombre d'antennes par nœud de réseau, la distribution spatiale de nœuds de réseau, le spectre de fréquence, le type de spectre de fréquence, le spectre de fréquence par nœud de réseau, la puissance d'émission par nœud de réseau ; les caractéristiques d'émission/de réception de nœuds de réseau ; et de quelconques combinaisons de ceux-ci,

la résolution de la carte de densité de ressources de système étant déterminée dynamiquement dans une quelconque ou dans toutes ses dimensions s'adaptant aux fluctuations de la distribution et de l'utilisation du système dans l'espace, le temps et/ou la fréquence.

2. Procédé selon la revendication 1, ladite carte de densité de ressources de système (10) étant déterminée selon au moins un critère d'optimisation du système.

3. Procédé selon la revendication 1 ou 2,
ledit au moins un premier paramètre de ressources de système (20) étant le spectre de fréquence, ladite carte de densité de ressources de système (10) étant une carte de densité de fréquence, et ladite planification de ressources (50) étant une planification de fréquence ; ou

ledit au moins un premier paramètre de ressources de système (20) étant une distribution spatiale de nœuds de réseau, ladite carte de densité de ressources de système (10) étant une carte de densité de nœuds de réseau, et ladite planification de ressources (50) étant une planification de nœuds de réseau ; ou

ledit au moins un premier paramètre de ressources de système (20) étant une distribution spatiale de capteurs de réseau, ladite carte de densité de ressources de système (10) étant une carte de densité de capteurs de réseau, et ladite planification de ressources (50) étant une planification de capteurs de réseau.

4. Procédé selon l'une quelconque des revendications précédentes, ladite carte de densité de ressources de système (10) et/ou ladite planification de ressources (50) étant en outre déterminée(s) sur la base d'au moins un deuxième paramètre (30 ; 40) caractérisant des utilisateurs du système et/ou une utilisation du système associée au système de communication.

5. Procédé selon la revendication 4, ledit au moins un deuxième paramètre (30 ; 40) étant des exigences de système et/ou des statistiques dans le groupe comprenant : le trafic du système, la qualité du canal, la qualité de service et/ou l'expérience requise, la performance du système, le coût et de quelconques combinaisons de ceux-ci.

6. Procédé selon la revendication 4 ou 5, ledit au moins un deuxième paramètre (30 ; 40) étant des exigences et/ou des statistiques d'utilisateur de ressources de système dans le groupe comprenant : la distribution spatiale et/ou la densité, la mobilité, le type d'utilisateur de ressources de système et l'équipement d'utilisateur, la demande de trafic, la charge de trafic, la qualité du service et/ou l'expérience, et de quelconques combinaisons de ceux-ci.

7. Procédé selon l'une des revendications précédentes, une taille de ladite au moins une région changeant de manière dynamique.

8. Procédé selon l'une quelconque des revendications précédentes, ladite au moins une partie des ressources de système étant représentée comme une valeur absolue ou comme une fraction des ressources de système.

9. Procédé selon l'une quelconque des revendications précédentes, les ressources de système étant partagées entre une pluralité d'opérateurs de système différents.

10. Procédé selon l'une quelconque des revendications précédentes,
l'étape I étant effectuée par au moins un premier nœud de commande (60) agencé pour commander une pluralité de régions du système de communication, et
l'étape II étant effectuée par au moins un deuxième nœud de commande (70) agencé pour commander et associé à ladite au moins une région.

11. Procédé selon la revendication 10, comprenant en outre l'étape de :
signalisation d'une partie de ladite carte de densité de ressources de système (10), associée à ladite au moins une région, audit au moins un deuxième nœud de commande (70).

12. Procédé selon l'une quelconque des revendications précédentes, comprenant en outre les étapes de :

signalisation de ladite planification de ressources (50) à un ou plusieurs nœuds de réseau (80) associés à ladite au moins une région ; et

planification, par ledit ou lesdits nœuds de réseau (80), de ressources de système selon ladite planification de ressources (50) dans ladite au moins une région.

13. Procédé selon l'une quelconque des revendications précédentes, comprenant en outre l'étape ou les étapes de :
réception d'une indication d'une planification de ressources selon l'étape II et/ou d'une indication d'utilisation de ressources de système dans ladite au moins une région, et mise à jour de ladite carte de densité de ressources de système (10) en fonction de l'étape I et en outre sur la base de ladite indication de planification de ressources et/ou de ladite indication d'utilisation de ressources de système ; et/ou réception d'une indication d'utilisation de ressources de système dans ladite au moins une région, et mise à jour de ladite planification de ressources (50) en fonction de l'étape II et sur la base en outre de ladite indication d'utilisation de ressources de système.

14. Dispositif de nœud de commande (60 ; 70) comprenant au moins un processeur (80) qui est agencé pour :

I) déterminer (100) une carte de densité de ressources de système (10) pour un système de communication sur la base d'au moins un premier paramètre de ressources de système (20) associé au système de communication, ladite carte de densité de ressources de système (10) comprenant au moins une région du système de communication et attribuant au moins une partie des ressources de système à ladite au moins une région ; et

II) déterminer (200) une planification de ressources (50) dans ladite au moins une région sur la base de ladite carte de densité de ressources de système (10), **caractérisé en ce que** les résolutions d'une ou de plusieurs dimensions de ladite carte de densité de ressources de système (10) changent de manière dynamique et ledit au moins un premier paramètre de ressources de système (20) est une ressource de système dans le groupe comprenant : le nombre de nœuds de réseau, le nombre d'antennes par nœud de réseau, la distribution spatiale de nœuds de réseau, le spectre de fréquence, le type de spectre de fréquence, le spectre de fréquence par nœud de réseau, la puissance d'émission par nœud de réseau ; les caractéristiques d'émission/de réception de nœuds de réseau ; et de quelconques combinaisons de ceux-ci,

la résolution de la carte de densité de ressources de système étant déterminée dynamiquement dans une quelconque ou dans toutes ses dimensions s'adaptant aux fluctuations de la distribution et de l'utilisation du système dans l'espace, le temps et/ou la fréquence.

**15.** Dispositif de nœud de commande (60 ; 70) selon la revendication 14, l'au moins un processeur (80) étant en outre agencé pour réaliser l'une quelconque des revendications 2 à 13.

**16.** Système de communication comprenant au moins un dispositif de nœud de commande selon l'une quelconque des revendications 14 et 15.

Input parameters 20, 30, 40     System resource density map 10     Resource scheduling 50

```
┌─────────────────┐                    ┌─────────────────┐
│ Density scheduler│                    │ Resource scheduler│
│   (Step 100)    │ ────────────────→  │    (Step 200)   │ ────→
└─────────────────┘                    └─────────────────┘
```

Fig. 1

Input parameters 20, 30, 40

Network node density map    Mobile node density map    Geographical area map

Density scheduler 100

System resource density map 10

Resource scheduler 200

Resource scheduling 50

Fig. 2

Input parameters 20, 30, 40          System resource          Resources scheduling 50
                                     density map 10

Density scheduler
(Step 100)
Feedback loop 1
FB1

Resource scheduler
(Step 200)
Feedback loop 2

FB2

Feedback loop 3
FB3

Fig. 3

First Control Node 60

Communication
interfaces

Second Control Node 70          ......          Second Control Node 70

NN 80          NN 80          ......          NN 80          NN 80          NN 80

Fig. 4

Fig. 5

x-coord

y-coord

Fig. 6

Input parameters
20, 30, 40

**Processor Unit 80**

100) Determining system
resource density map 10

200) Determining resource
scheduling 50

50

60; 70

Fig. 7

Fig. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2491362 A
- WO 2012040878 A1
- US 2003186693 A1
- US 2011105132 A1